# EUROPEAN PATENT APPLICATION

(11) **EP 4 019 860 A1**
(43) Date of publication of application: **29.06.2022**
(21) Application number: 20871065.7
(22) Date of filing: 29.09.2020
(51) Int. Cl.: F25B 7/00, F25B 30/02, F25B 1/00

(54) **HEAT TREATMENT SYSTEM**

(30) Priority: 30.09.2019 JP 2019180815
(71) Applicant: Daikin Industries, Ltd., Osaka-shi, Osaka 530-8323 (JP)
(72) Inventor: YAMADA, Takuro, Osaka-shi, Osaka 530-8323 (JP); YOSHIMI, Atsushi, Osaka-shi, Osaka 530-8323 (JP); KUMAKURA, Eiji, Osaka-shi, Osaka 530-8323 (JP); IWATA, Ikuhiro, Osaka-shi, Osaka 530-8323 (JP); MIYAZAKI, Takeru, Osaka-shi, Osaka 530-8323 (JP)
(74) Representative: Hoffmann Eitle
(86) International application number: PCT/JP2020/036997
(87) International publication number: WO 2021/065943

(57) **Abstract**

A heat-source side cycle and a load side cycle share a cascade heat exchanger (41, 42). A total number of the heat-source side cycle and the load side cycle is three or more. A first cycle (C1) circulates a first refrigerant or heat medium. A second cycle (C2) circulates a second refrigerant or heat medium. A third cycle (C3) circulates a third refrigerant or heat medium. The first refrigerant or heat medium, the second refrigerant or heat medium, and the third refrigerant or heat medium are different from one another.

## Description

### TECHNICAL FIELD

The present disclosure relates to a heat treatment system.

### BACKGROUND ART

As a heat treatment system in the related art, there is a two-stage refrigeration apparatus including a high-temperature side (primary) refrigeration cycle and a low-temperature side (secondary) refrigeration cycle. For example, Patent Document 1 (Japanese Patent Laying Open No. 11-173725) discloses a showcase refrigeration apparatus including an outdoor unit, a cascade unit, and a showcase refrigeration unit.

### SUMMARY OF THE INVENTION

### <Technical Problem>

The showcase refrigeration apparatus in the above-described Patent Document 1 uses two refrigerants, that is, a primary refrigerant circulating through a primary refrigeration cycle and a secondary refrigerant circulating through a secondary refrigeration cycle. It may be, however, difficult to operate optimally when the application of a load side unit varies.

### <Solution to Problem>

A heat treatment system according to a first aspect includes load side cycles heat-source side cycle and load side cycles load side cycle. The heat-source side cycle and the load side cycle share a cascade heat exchanger. A total number of the heat-source side cycle and the load side cycle is three or more. A first cycle circulates a first refrigerant or heat medium. A second cycle circulates a second refrigerant or heat medium. A third cycle circulates a third refrigerant or heat medium. The first refrigerant or heat medium, the second refrigerant or heat medium, and the third refrigerant or heat medium are different from one another.

In the heat treatment system according to the first aspect, three or more media are used in three or more cycles, and therefore an appropriate medium may be used depending on the application of the load side cycle.

The heat treatment system according to a second aspect is the heat treatment system according to the first aspect, and at least one of the first to third cycles includes a cycle that circulates a refrigerant. The cycle that circulates the refrigerant is a vapor-compression refrigerant cycle.

In the heat treatment system according to the second aspect, a refrigerant for a vapor-compression refrigeration cycle may be used as the refrigerant.

The heat treatment system according to a third aspect is the heat treatment system according to the first or second aspect, and at least one of the first to third cycles includes a cycle that circulates a heat medium. The cycle that circulates the heat medium is a cycle using sensible heat in a liquid phase.

In the heat treatment system according to the third aspect, the heat medium using sensible heat may be used as the heat medium.

The heat treatment system according to a fourth aspect is the heat treatment system according to the first or second aspect, and at least one of the first to third cycles includes a cycle that circulates a heat medium. The cycle that circulates the heat medium is a cycle using sensible heat and latent heat.

In the heat treatment system according to the fourth aspect, the heat medium using sensible heat and latent heat may be used as the heat medium.

The heat treatment system according to a fifth aspect is the heat treatment system according to the first to fourth aspects, and the load side cycle includes at least one of a freezer cycle and a refrigerator cycle. The freezer cycle and the refrigerator cycle use a high-pressure refrigerant.

In the heat treatment system according to the fifth aspect, the high-pressure refrigerant having a high density in a low-temperature area may be used for the freezer cycle and the refrigerator cycle. Therefore, a suitable refrigerant may be used depending on a low-temperature application of the load side unit.

The above-described "high-pressure refrigerant" has a condensation temperature of 25°C and a pressure of more than 1.3 MPa.

The heat treatment system according to a sixth aspect is the heat treatment system according to the first to fifth aspects, and the load side cycle includes at least one of a heating cycle and a hot-water supply cycle. The heating cycle and the hot-water supply cycle use a medium-pressure refrigerant or a low-pressure refrigerant.

In the heat treatment system according to the sixth aspect, the medium-pressure refrigerant or the low-pressure refrigerant having a high critical temperature may be used for the heating cycle and the hot-water supply cycle. Therefore, an appropriate refrigerant may be used depending on a high-temperature application of the load side unit.

The above-described "medium-pressure refrigerant" has a condensation temperature of 25°C and a pressure of more than 0.8 MPa and equal to or less than 1.3 MPa. The above-described "low-pressure refrigerant" has a condensation temperature of 25°C and a pressure of more than 0.08 MPa and equal to or less than 0.8 MPa.

The heat treatment system according to a seventh aspect is the heat treatment system according to the first to sixth aspects, and the heat-source side cycle is disposed outdoors. The heat-source side cycle disposed outdoors uses a refrigerant having an RCL smaller than R410A.

In the heat treatment system according to the seventh aspect, the heat-source side cycle using the refrigerant having a low RCL is disposed outdoors so that the restriction on the refrigerant to be used may be reduced. Therefore, an appropriate refrigerant may be used in the heat-source side cycle.

The above-described "refrigerant concentration limit (RCL)" is defined by ISO 817 (Refrigerants Designation and safety classification). Specifically, the RCL is the smallest value among the acute-toxicity exposure limit (ATEL), the oxygen deprivation limit (ODL), and the flammable concentration limit (FCL).

The heat treatment system according to an eighth aspect is the heat treatment system according to the first to seventh aspects and further includes a cascade unit including the cascade heat exchanger. At least a part of the cascade unit is disposed outdoors.

In the heat treatment system according to the eighth aspect, it is possible to reduce the restriction on the refrigerant used for the cascade unit disposed outdoors.

The heat treatment system according to a ninth aspect is the heat treatment system according to the first to eighth aspects, and the first and second cycles are the heat-source side cycles. The first refrigerant or heat medium and the second refrigerant or heat medium are different from each other.

In the heat treatment system according to the ninth aspect, the heat exchanger effectiveness on the heat source side may be improved.

The heat treatment system according to a tenth aspect is the heat treatment system according to the first to ninth aspects, and the load side cycle includes at least one of a cooling cycle, a freezer cycle, and a refrigerator cycle. The heat-source side cycle uses a medium-pressure refrigerant or a low-pressure refrigerant.

In the heat treatment system according to the tenth aspect, the heat-source side cycle may use the medium-pressure refrigerant or the low-pressure refrigerant having a high critical temperature. Heat may be exchanged between the refrigerant in the heat-source side cycle and the refrigerant or heat medium in at least one of the cooling cycle, the freezer cycle, and the refrigerator cycle.

### BRIEF DESCRIPTION OF THE DRAWINGS

Fig. 1 is a schematic configuration diagram of a heat treatment system according to a first embodiment of the present disclosure.
Fig. 2 is a schematic configuration diagram of a heat treatment system according to a second embodiment of the present disclosure.
Fig. 3 is a schematic configuration diagram of a heat treatment system according to a third embodiment of the present disclosure.
Fig. 4 is a schematic configuration diagram of a heat treatment system according to a fourth embodiment of the present disclosure.
Fig. 5 is a schematic configuration diagram of a heat treatment system according to a fifth embodiment of the present disclosure.
Fig. 6 is a schematic configuration diagram of a heat treatment system according to a modification of the fifth embodiment of the present disclosure.
Fig. 7 is a schematic configuration diagram of a heat treatment system according to a sixth embodiment of the present disclosure.

### DESCRIPTION OF EMBODIMENTS

A heat treatment system according to an embodiment of the present disclosure will be described with reference to the drawings.

### (1) First Embodiment

### (1-1) Overall Configuration

A heat treatment system 1 according to one embodiment of the present disclosure includes one or more heat-source side cycles and one or more load side cycles. A total number of the heat-source side cycles and the load side cycles is three or more. The heat-source side cycle is a cycle that generates heat to be supplied to the load side cycle. The load side cycle is a cycle to which the heat required depending on the application is supplied from the heat-source side cycle.

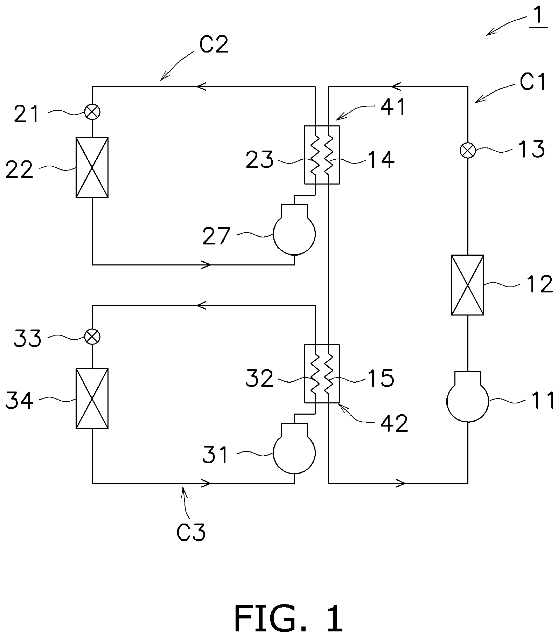

As illustrated in Fig. 1, the heat treatment system 1 includes a first cycle C1, a second cycle C2, and a third cycle C3. Here, the first cycle C1 is a heat-source side cycle, and the second and third cycles C2 and C3 are load side cycles. The heat-source side cycle and the load side cycle share a first cascade heat exchanger 41 and a second cascade heat exchanger 42.

### (1-2) Detailed Configuration

### (1-2-1) First Cycle

The first cycle C1 circulates a first refrigerant or heat medium. In the present embodiment, the first cycle C1 is a cycle that circulates the first refrigerant. Specifically, the first cycle C1 is a vapor-compression refrigeration cycle. The first cycle C1 is a high-stage refrigeration cycle on a high-temperature side and here is used for an outdoor unit of an air conditioner. A high-pressure refrigerant, here for example R32, is used as the first refrigerant.

In the first cycle C1, a first compressor 11, a first condenser 12, a first expansion valve 13, an upstream first evaporator 14, and a downstream second evaporator 15 are sequentially coupled with a refrigerant pipe to form a refrigerant circuit.

The first compressor 11 suctions the first refrigerant flowing through the first cycle C1, compresses the suctioned first refrigerant into a high-temperature and high-pressure gas refrigerant, and discharges the gas refrigerant. In the present embodiment, the first compressor 11 is a type of compressor that controls the number of rotations using an inverter circuit so as to adjust the discharge amount of the refrigerant.

The first condenser 12 exchanges heat between, for example, air or brine and the first refrigerant flowing through the first cycle to condense and liquefy the refrigerant. In the present embodiment, the first condenser 12 exchanges heat between the outside air and the first refrigerant.

The first expansion valve 13 is, for example, an electronic expansion valve that decompresses and expands the first refrigerant flowing through the first cycle.

The first evaporator 14 evaporates the first refrigerant flowing through the first cycle C1 by heat exchange. In the present embodiment, the first evaporator 14 includes, for example, a heat transfer tube that passes the first refrigerant flowing through the first cycle C1 in the first cascade heat exchanger 41. In the first cascade heat exchanger 41, heat is exchanged between the first refrigerant flowing through the first evaporator 14 and a second refrigerant flowing through the second cycle C2.

The first evaporator 15 evaporates the first refrigerant flowing through the first cycle by heat exchange. In the present embodiment, the first evaporator 15 includes, for example, a heat transfer tube that passes the first refrigerant flowing through the first cycle C1 in the second cascade heat exchanger 42. In the second cascade heat exchanger 42, heat is exchanged between the first refrigerant flowing through the first evaporator 14 and a third heat medium flowing through the third cycle C3.

The heat-source side cycle, which is the first cycle C1, is disposed outdoors. For example, a part of the first cycle may be disposed outdoors, but here the entire first cycle C1 is disposed outdoors. The heat-source side cycle disposed outdoors may use a refrigerant having an RCL smaller than R410A. The refrigerant having an RCL smaller than 410Ais, for example, R32.

The RCL is a concentration limit in air in consideration of a safety factor and is an index for the purpose of reducing risks of acute toxicity, asphyxiation, and flammability in a confined space where persons are present. The RCL is determined based on ISO 817. Specifically, the RCL is the smallest value among the acute-toxicity exposure limit (ATEL), the oxygen deprivation limit (ODL), and the flammable concentration limit (FCL).

### (1-2-2) Second Cycle

The second cycle C2 circulates the second refrigerant or heat medium. In the present embodiment, the second cycle C2 is a cycle that circulates the second refrigerant. Specifically, the second cycle C2 is a low-stage refrigeration cycle on a low-temperature side and here is used for an indoor unit of an air conditioner. The second refrigerant is different from the first refrigerant. For example, R1234ze is used as the second refrigerant.

In the second cycle C2, a second expansion valve 21, a second evaporator 22, a second compressor 27, and a second condenser 23 are sequentially coupled with a refrigerant pipe to form a refrigerant circuit.

The second expansion valve 21 is, for example, an electronic expansion valve that decompresses and expands the second refrigerant flowing through the second cycle C2.

The second evaporator 22 evaporates the second refrigerant flowing through the second cycle by heat exchange. In the present embodiment, the second evaporator 22 exchanges heat between the indoor air and the second refrigerant.

The second compressor 27 suctions the second refrigerant flowing through the second cycle C2, compresses the suctioned second refrigerant into a high-temperature and high-pressure gas refrigerant, and discharges the gas refrigerant.

The second condenser 23 condenses the second refrigerant flowing through the second cycle by heat exchange. In the present embodiment, the second condenser 23 includes for example a heat transfer tube that passes the second refrigerant flowing through the second cycle in the first cascade heat exchanger 41.

### (1-2-3) Third Cycle

The third cycle C3 circulates the third refrigerant or heat medium. In the present embodiment, the third cycle C3 is a cycle that circulates the third heat medium. Specifically, the third cycle C3 is a low-stage refrigeration cycle on a low-temperature side and here is used for a showcase incorporating a showcase freezer unit or refrigerator unit. The third heat medium is different from the first refrigerant and the second refrigerant. For example, CO₂ is used as the third heat medium.

In the third cycle C3, a third compressor 31, a third condenser 32, a third expansion valve 33, and a third evaporator 34 are sequentially coupled with a pipe to form a heat medium circuit.

The third compressor 31 suctions the third heat medium flowing through the third cycle C3, compresses the suctioned third heat medium into a high-temperature and high-pressure gas medium, and discharges the gas medium. In the present embodiment, the third compressor 31 is a type of compressor that controls the number of rotations using an inverter circuit so as to adjust the discharge amount of another medium.

The third condenser 32 condenses the third heat medium flowing through the third cycle by heat exchange. In the present embodiment, the third condenser 32 includes for example a heat transfer tube that passes the third heat medium flowing through the third cycle C3 in the second cascade heat exchanger 42.

The third expansion valve 33 is, for example, an electronic expansion valve that decompresses and expands the third heat medium flowing through the third cycle C3.

The third evaporator 34 evaporates the third heat medium flowing through the third cycle by heat exchange. In the present embodiment, the third evaporator 34 exchanges heat by freezing or refrigerating the inside of the showcase.

### (1-2-4) Cascade Heat Exchanger

The first cycle C1 and the second cycle C2 share the first cascade heat exchanger 41. The first cascade heat exchanger 41 has an integrated combination of the first evaporator 14 and the second condenser 23. The first cascade heat exchanger 41 exchanges heat between the first refrigerant flowing through the first evaporator 14 and the second refrigerant flowing through the second condenser 23.

The first cycle C1 and the third cycle C3 share the second cascade heat exchanger 42. The second cascade heat exchanger 42 has an integrated combination of the first evaporator 15 and the third condenser 32. The second cascade heat exchanger 42 exchanges heat between the first refrigerant flowing through the first evaporator 15 and the third heat medium flowing through the third condenser 32.

The first cascade heat exchanger 41 and the second cascade heat exchanger 42 are connected in series.

### (1-3) Operation of Heat Treatment System

Next, an operation of the heat treatment system 1 will be described.

First, in the first cycle C1, the first refrigerant discharged from the first compressor 11 flows into the first condenser 12 and radiates heat to the outside air and condenses in the first condenser 12. After the first refrigerant is expanded in the first expansion valve 13, the first refrigerant absorbs heat from the second refrigerant and evaporates in the first evaporator 14 of the first cascade heat exchanger 41 and further absorbs heat from the third heat medium and evaporates in the first evaporator 15 of the second cascade heat exchanger 42. Then, the first refrigerant is suctioned into the first compressor 11. In the first cycle C1, the first refrigerant circulates as described above to repeat a compression process, a condensation process, an expansion process, and an evaporation process.

In the second cycle C2, the second refrigerant radiates heat to the first refrigerant and condenses in the second condenser 23 of the first cascade heat exchanger 41. After the second refrigerant is expanded in the second expansion valve 21, the second refrigerant absorbs heat from the indoor air and evaporates in the second evaporator 22 and thus cools the indoor air. Then, after the second refrigerant is compressed by the second compressor 27, the second refrigerant flows into the second condenser 23. The second refrigerant circulates as described above to repeat a condensation process, an expansion process, an evaporation process, and a compression process and thus cool the inside of the room.

In the third cycle C3, the third heat medium discharged from the third compressor 31 flows into the third condenser 32 of the second cascade heat exchanger 42 and radiates heat to the first refrigerant and condenses. After the third heat medium is expanded in the third expansion valve 33, the third heat medium absorbs heat from the showcase and evaporates in the third evaporator 34 to freeze or refrigerate the inside of the showcase. Then, the third heat medium is suctioned into the third compressor 31. In the third cycle C3, the third heat medium circulates as described above to repeat a compression process, a condensation process, an expansion process, and an evaporation process and thus freeze or refrigerate the showcase.

In the present embodiment, the first cycle C1 serving as the heat-source side cycle uses a medium-pressure refrigerant or a low-pressure refrigerant having a high critical temperature. The refrigerant in the heat-source side cycle exchanges heat with the second refrigerant in the second cycle C2 serving as an air cooling cycle and the third heat medium in the third cycle C3 serving as a freezer cycle or a refrigerator cycle.

### (1-4) Feature

In the heat treatment system 1 according to the present embodiment, the first refrigerant or heat medium circulating through the first cycle C1, the second refrigerant or heat medium circulating through the second cycle C2, and the third refrigerant or heat medium circulating through the third cycle C3 are different from one another. Three or more media are used in three or more cycles, and therefore an appropriate medium may be used depending on the application of the load side cycle. Here, the first and second cycles C1 and C2 use the first and second refrigerants suitable for an air conditioner, and the third cycle C3 uses the third heat medium suitable for a freezer or refrigerator.

### (1-5) Modification of First Embodiment

In the above-described embodiment, the first refrigerant circulates through the first cycle C1, the second refrigerant circulates through the second cycle C2, and the third heat medium circulates through the third cycle C3, but this is not a limitation. For example, different refrigerants may circulate in all of the first to third cycles C1 to C3, or different heat media may circulate in all of the first to third cycles C1 to C3. According to the present modification, a third refrigerant circulates through the third cycle C3. Here, a freezer cycle or a refrigerator cycle serving as the third cycle C3 uses a high-pressure refrigerant as the third refrigerant. The high-pressure refrigerant is, for example, CO₂.

According to the present modification, the load side cycle includes at least one of the freezer cycle and the refrigerator cycle, and the freezer cycle and the refrigerator cycle use a high-pressure refrigerant. As the freezer cycle and the refrigerator cycle use a high-pressure refrigerant having a high density in a low-temperature area, a suitable refrigerant may be used depending on a low-temperature application of the third cycle C3 that is a load side unit.

### (2) Second Embodiment

### (2-1) Overall Configuration

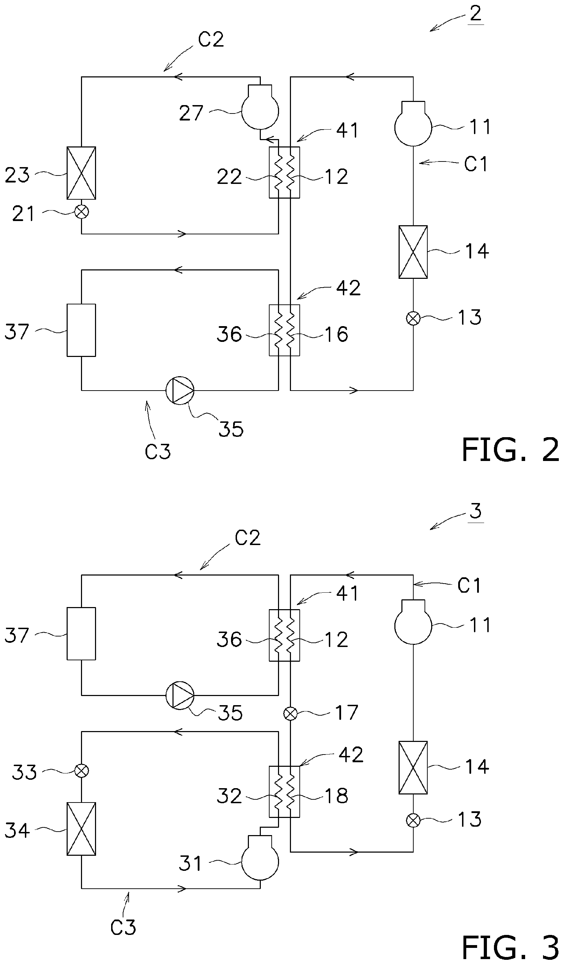

As illustrated in Fig. 2, in a heat treatment system 2 according to the present embodiment, the first cycle C1 is a low-stage refrigeration cycle on a low-temperature side, and the second and third cycles C2 and C3 are high-stage refrigeration cycles on a high-temperature side. Specifically, the first cycle C1 is a heat-source side cycle forming an outdoor unit of an air conditioner. The second cycle C2 is an air heating cycle forming an indoor unit of the air conditioner. The third cycle C3 is a hot-water supply cycle.

### (2-2) Detailed Configuration

In the first cycle C1, the first compressor 11, the upstream first condenser 12, a downstream first condenser 16, the first expansion valve 13, and the first evaporator 14 are sequentially coupled with a refrigerant pipe to form a refrigerant circuit. The first refrigerant circulating through the first cycle C1, the first compressor 11, and the first expansion valve 13 are the same as those in the first embodiment described above.

The first condensers 12 and 16 condense the first refrigerant flowing through the first cycle by heat exchange. The upstream first condenser 12 includes, for example, a heat transfer tube that passes the first refrigerant flowing through the first cycle in the first cascade heat exchanger 41. The downstream first condenser 16 includes, for example, a heat transfer tube that passes the second refrigerant flowing through the second cycle in the second cascade heat exchanger 42.

The first evaporator 14 exchanges heat between, for example, air, brine, or the like and the first refrigerant flowing through the first cycle to evaporate the refrigerant. In the present embodiment, the first evaporator 14 exchanges heat between the outside air and the first refrigerant.

In the second cycle C2, the second evaporator 22, the second compressor 27, the second condenser 23, and the second expansion valve 21 are sequentially coupled with a refrigerant pipe to form a refrigerant circuit. The second cycle serving as an air heating cycle uses a medium-pressure refrigerant or a low-pressure refrigerant. The medium-pressure refrigerant is, for example, R1234ze(E). The low-pressure refrigerant is, for example, R1234ze(Z).

The second evaporator 22 evaporates the second refrigerant flowing through the second cycle C2 by heat exchange with the first refrigerant. It includes a heat transfer tube that passes the second refrigerant flowing through the second cycle C2 in the first cascade heat exchanger 41.

The second condenser 23 condenses the second refrigerant flowing through the second cycle C2 by heat exchange with the indoor air.

The third cycle C3 is a hot water circuit for hot-water supply to generate hot water from water. The third cycle C3 is a cycle that uses sensible heat in a liquid phase. The heat medium using sensible heat is, for example, water, brine, or the like and here water is used as the third heat medium.

In the third cycle C3, a circulating pump 35, a heat absorption unit 36, and a hot water storage tank 37 are sequentially coupled with a pipe to form a circuit. In the third cycle C3, water or hot water circulates so that hot water heated by the heat absorption unit 36 of the second cascade heat exchanger 42 is stored in the hot water storage tank 37. In order to supply and discharge water to and from the hot water storage tank 37, the hot water circuit for hot-water supply is coupled to a water supply pipe to the hot water storage tank 37 and a hot water discharge pipe from the hot water storage tank 37.

### (2-3) Operation of Heat Treatment System

First, in the first cycle C1, the first refrigerant discharged from the first compressor 11 radiates heat from the second refrigerant and condenses in the upstream first condenser 12 of the first cascade heat exchanger 41 and further radiates heat from the third heat medium and condenses in the downstream first condenser 16 of the second cascade heat exchanger 42. Then, after the first refrigerant is expanded in the first expansion valve 13, the first refrigerant absorbs heat from the outside air and evaporates in the first evaporator 14. In the first cycle C1, the first refrigerant circulates as described above to repeat a compression process, a condensation process, an expansion process, and an evaporation process.

In the second cycle C2, the second refrigerant absorbs heat to the first refrigerant and evaporates in the second evaporator 22 of the first cascade heat exchanger 41. After the second refrigerant is compressed by the second compressor 27, the second refrigerant radiates heat from the indoor air and condenses in the second condenser 23 and thus heats the indoor air. Then, after the second refrigerant is expanded in the second expansion valve 21, the second refrigerant flows into the second evaporator 22. The second refrigerant circulates as described above to repeat a condensation process, a compression process, an evaporation process, and an expansion process and thus heat the inside of the room.

In the third cycle C3, the water in the hot water storage tank 37 is supplied by the circulating pump 35 to the heat absorption unit 36 of the second cascade heat exchanger 42, and the water is heated by absorption of heat from the first refrigerant. The hot water generated by heating returns to the hot water storage tank 37, and the hot water continuously circulates through the third cycle C3 until a predetermined heat storage temperature is obtained.

### (2-4) Feature

According to the present embodiment, the air heating cycle and the hot-water supply cycle used for high-temperature applications are applied to the load side cycles. The air heating cycle, which is the second cycle C2, uses a medium-pressure refrigerant or a low-pressure refrigerant. As a medium-pressure refrigerant and a low-pressure refrigerant have a high critical temperature, an appropriate medium is used depending on a high-temperature application of the load side cycle according to the present embodiment.

### (2-5) Modification of Second Embodiment

According to the embodiment described above, water is used as a heat medium in the hot-water supply cycle, but this is not a limitation. For example, the load side cycle may include at least one of the air heating cycle and the hot-water supply cycle, and the air heating cycle and the hot-water supply cycle may use a medium-pressure refrigerant or a low-pressure refrigerant.

### (3) Third Embodiment

### (3-1) Overall Configuration

As illustrated in Fig. 3, in a heat treatment system 3 according to the present embodiment, the first cycle C1 is a high-stage refrigeration cycle on a high-temperature side with respect to the second cycle C2 and is a low-stage refrigeration cycle on a low-temperature side with respect to the third cycle C3. Specifically, the first cycle C1 is a heat-source side cycle forming an outdoor unit of an air conditioner. The second cycle C2 is a hot-water supply cycle. The third cycle C3 is a freezer or refrigerator cycle.

### (3-2) Detailed Configuration

In the first cycle C1, the first compressor 11, the first condenser 12, an additional expansion valve 17, an upstream first evaporator 18, the first expansion valve 13, and the downstream first evaporator 14 are sequentially coupled with a refrigerant pipe to form a refrigerant circuit. The first refrigerant circulating through the first cycle C1, the first compressor 11, and the first expansion valve 13 are the same as those in the first embodiment described above.

The first condenser 12 condenses the first refrigerant flowing through the first cycle C1 by heat exchange with the second heat medium in the first cascade heat exchanger 41. The first condenser 12 includes, for example, a heat transfer tube that passes the first refrigerant flowing through the first cycle C1 in the first cascade heat exchanger 41.

The additional expansion valve 17 is, for example, an electronic expansion valve that decompresses and expands the first refrigerant condensed by the first condenser 12.

The first evaporator 18 evaporates the first refrigerant flowing through the first cycle C1 by heat exchange with the third heat medium in the second cascade heat exchanger 42. The first evaporator 18 includes, for example, a heat transfer tube that passes the first refrigerant flowing through the first cycle C1 in the second cascade heat exchanger 42.

The second cycle C2 is substantially the same as the third cycle C3 according to the second embodiment. Specifically, the circulating pump 35, the heat absorption unit 36, and the hot water storage tank 37 are coupled in the second cycle C2. The heat absorption unit 36 includes, for example, a heat transfer tube that passes the second heat medium flowing through the second cycle C2 in the first cascade heat exchanger 41. In the second cycle C2, water or hot water circulates so that the hot water heated by the heat absorption unit 36 of the first cascade heat exchanger 41 is stored in the hot water storage tank 37.

The third cycle C3 is the same as the third cycle C3 according to the first embodiment.

### (3-3) Operation of Heat Treatment System

First, in the first cycle C1, the first refrigerant discharged from the compressor 11 radiates heat from the second refrigerant and condenses in the first condenser 12 of the first cascade heat exchanger 41. Then, after the first refrigerant is expanded in the additional expansion valve 17, the first refrigerant absorbs heat from the third heat medium and evaporates in the first condenser 16 of the second cascade heat exchanger 42. Then, after the first refrigerant is expanded in the first expansion valve 13, the first refrigerant absorbs heat from the outside air and evaporates in the first evaporator 14. In the first cycle C1, the first refrigerant circulates as described above to repeat a compression process, a condensation process, an expansion process, an evaporation process, an expansion process, and an evaporation process.

In the second cycle C2, the water in the hot water storage tank 37 is supplied by the circulating pump 35 to the heat absorption unit 36 of the first cascade heat exchanger 41, and the water is heated by absorption of heat from the first refrigerant. The hot water generated by heating returns to the hot water storage tank 37, and the hot water continuously circulates through the second cycle C2 until a predetermined heat storage temperature is obtained.

In the third cycle C3, the third heat medium discharged from the third compressor 31 flows into the third condenser 32 of the second cascade heat exchanger 42 and radiates heat to the first refrigerant and condenses. After the third heat medium is expanded in the third expansion valve 33, the third heat medium absorbs heat from the showcase and evaporates in the third evaporator 34 to freeze or refrigerate the inside of the showcase. Then, the third heat medium is suctioned into the third compressor 31. In the third cycle C3, the third heat medium circulates as described above to repeat a compression process, a condensation process, an expansion process, and an evaporation process and thus freeze or refrigerate the showcase.

### (3-4) Feature

According to the present embodiment, the cycle used for a high-temperature application and the cycle used for a low-temperature application are applied to the load side cycles. As the first refrigerant or heat medium, the second refrigerant or heat medium, and the third refrigerant or heat medium are different from one another, an appropriate medium may be used depending on the application of each load side cycle.

### (4) Fourth Embodiment

### (4-1) Overall Configuration

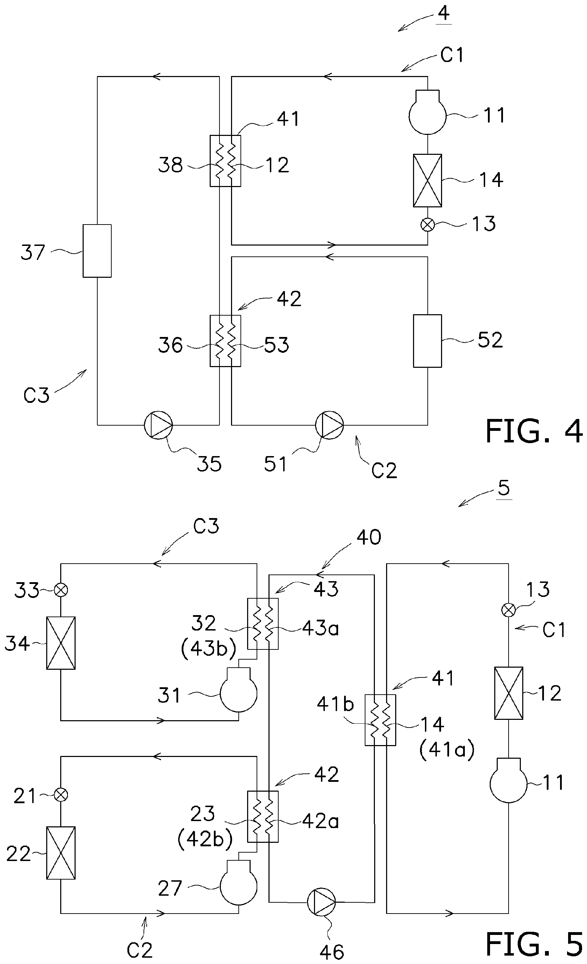

As illustrated in Fig. 4, a heat treatment system 4 according to the present embodiment includes a plurality of heat-source side cycles. Specifically, the first and second cycles C1 and C2 are heat-source side cycles, and the third cycle C3 is a load side cycle. Specifically, the first cycle C1 is a heat-source side cycle forming an outdoor unit of an air conditioner. The second cycle C2 is a heat-source side cycle using solar heat. The third cycle C3 is a hot-water supply cycle.

### (4-2) Detailed Configuration

In the first cycle C1, the first compressor 11, the first condenser 12, the first expansion valve 13, and the first evaporator 14 are sequentially coupled with a refrigerant pipe to form a refrigerant circuit. The first cycle C1 according to the fourth embodiment is different from the first cycle C1 according to the second embodiment in that the downstream first condenser 16 is omitted. Similarly, the first cycle C1 according to the fourth embodiment is different from the first cycle C1 according to the third embodiment in that the upstream first evaporator 18 is omitted.

In the second cycle C2, a circulating pump 51, a solar heat panel 52, and a heat radiation unit 53 are coupled. In the second cycle C2, the second heat medium heated by the solar heat panel 52 circulates so as to radiate heat in the heat radiation unit 53 of the first cascade heat exchanger 41. In the second cycle C2, for example, CO₂ circulates as the second heat medium.

In the third cycle C3, the circulating pump 35, an upstream heat absorption unit 36, a downstream heat absorption unit 38, and the hot water storage tank 37 are coupled. In the third cycle C3, water or hot water circulates so that the hot water heated by the upstream heat absorption unit 36 of the second cascade heat exchanger 42 and further heated by the downstream heat absorption unit 38 of the first cascade heat exchanger 41 is stored in the hot water storage tank 37.

The first cycle C1 and the third cycle C2 share the first cascade heat exchanger 41. The second cycle C2 and the third cycle C3 share the second cascade heat exchanger 42.

### (4-3) Operation of Heat Treatment System

First, in the first cycle C1, the first refrigerant discharged from the compressor 11 radiates heat from the third heat medium and condenses in the first condenser 12 of the first cascade heat exchanger 41. Then, after the first refrigerant is expanded in the first expansion valve 13, the first refrigerant absorbs heat from the outside air and evaporates in the first evaporator 14. In the first cycle C1, the first refrigerant circulates as described above to repeat a compression process, a condensation process, an expansion process, and an evaporation process.

In the second cycle C2, the second heat medium heated by the solar heat panel 52 is supplied by the circulating pump 51 to the heat radiation unit 53 of the second cascade heat exchanger 42 and is cooled as the heat is absorbed by the third heat medium. The cooled second heat medium continuously circulates through the second cycle C2.

In the third cycle C3, the water in the hot water storage tank 37 is supplied by the circulating pump 35 to the heat absorption unit 36 of the second cascade heat exchanger 42 and is heated by absorption of heat from the second heat medium. Then, the heated water is supplied to the heat absorption unit 38 of the first cascade heat exchanger 41 and is further heated by absorption of heat from the first heat medium. The hot water generated by heating at two stages returns to the hot water storage tank 37, and the hot water continuously circulates through the third cycle C3 until a predetermined heat storage temperature is obtained.

### (4-4) Feature

According to the present embodiment, the first and second cycles C1 and C2 are heat-source side cycles, and the first refrigerant or heat medium and the second refrigerant or heat medium are different from each other. Thus, the heat exchanger effectiveness on the heat source side may be improved.

### (4-5) Modification of Fourth Embodiment

In an example described according to the above embodiment, the second cycle C2 is a cycle where CO₂ circulates as a heat medium, but this is not a limitation. In the present modification, the cycle where the heat medium circulates is a cycle using sensible heat and latent heat. The heat medium using sensible heat and latent heat is, for example, fluorocarbon water (a mixed liquid of fluorocarbon and water).

### (5) Fifth Embodiment

### (5-1) Overall Configuration

As illustrated in Fig. 5, a heat treatment system 5 according to a fifth embodiment further includes a cascade unit 40 in the above-described first embodiment. Therefore, the heat treatment system 5 in the present embodiment primarily includes the first cycle C1, the second cycle C2, the third cycle C3, and the cascade unit 40.

The cascade unit 40 includes a secondary cycle where a secondary medium circulates through the first cascade heat exchanger 41, a third cascade heat exchanger 43, and the second cascade heat exchanger 42 by a circulating pump 46. For example, the secondary medium circulating through the secondary cycle may be the same as or different from the first refrigerant or heat medium, the second refrigerant or heat medium, or the third refrigerant or heat medium.

### (5-2) Detailed Configuration

The first cycle C1 includes the first cascade heat exchanger 41. The evaporator 14 of the first cycle C1 evaporates the first refrigerant by heat exchange with the secondary medium flowing through the first cascade heat exchanger 41.

The second cycle C2 includes the second cascade heat exchanger 42. The second condenser 23 of the second cycle C2 condenses the second refrigerant by heat exchange with the secondary medium flowing through the second cascade heat exchanger 42.

The third cycle C3 includes the third cascade heat exchanger 43. The condenser 32 of the third cycle C3 condenses the third refrigerant by heat exchange with the secondary medium flowing through the third cascade heat exchanger 43.

The first cascade heat exchanger 41 includes a heat absorption unit 41a and a heat radiation unit 41b. The heat absorption unit 41a is the first evaporator 14 of the first cycle C1. In the heat radiation unit 41b, the secondary medium circulating through the secondary cycle of the cascade unit 40 radiates heat to the first refrigerant. In the first cascade heat exchanger 41, the first cycle C1 including the heat absorption unit 41a is a heat-source side cycle, and the secondary cycle including the heat radiation unit 41b is a load side cycle.

The second cascade heat exchanger 42 includes a heat absorption unit 42a and a heat radiation unit 42b. In the heat absorption unit 42a, the secondary medium circulating through the secondary cycle absorbs heat from the second refrigerant. The heat radiation unit 42b is the second condenser 23 of the second cycle C2. In the second cascade heat exchanger 42, the secondary cycle including the heat absorption unit 42a is a heat-source side cycle, and the second cycle C2 including the heat radiation unit 42b is a load side cycle.

The third cascade heat exchanger 43 includes a heat absorption unit 43a and a heat radiation unit 43b. In the heat absorption unit 43a, the secondary medium circulating through the secondary cycle absorbs heat from the third heat medium. The heat radiation unit 43b is the third condenser 32 of the third cycle C3. In the third cascade heat exchanger 43, the secondary cycle including the heat absorption unit 43a is a heat-source side cycle, and the third cycle C3 including the heat radiation unit 43b is a load side cycle.

At least a part of the cascade unit 40 is disposed outdoors. Here, at least a portion forming the heat-source side cycle in the cascade unit 40 is disposed outdoors. In the present embodiment, the entire first cascade unit 40 is disposed outdoors.

### (5-3) Operation of Heat Treatment System

In the first cycle C1, the first refrigerant discharged from the first compressor 11 flows into the first condenser 12 and radiates heat to the outside air and condenses in the first condenser 12. After the first refrigerant is expanded in the first expansion valve 13, the first refrigerant absorbs heat from the secondary medium and evaporates in the first evaporator 14 of the first cascade heat exchanger 41. Then, the first refrigerant is suctioned into the first compressor 11. In the first cycle C1, the first refrigerant circulates as described above to repeat a compression process, a condensation process, an expansion process, and an evaporation process.

In the secondary cycle of the cascade unit 40, the secondary medium radiates heat to the first refrigerant to be cooled in the heat radiation unit 41b of the first cascade heat exchanger 41. The secondary medium absorbs heat from the second refrigerant to be heated in the heat absorption unit 43a of the third cascade heat exchanger 43. Further, the secondary medium absorbs heat from the third heat medium to be heated in the heat absorption unit 42a of the second cascade heat exchanger 42. The heated secondary medium flows into the heat radiation unit 41b of the first cascade heat exchanger 41. In the secondary cycle, the secondary medium circulates as described above to repeat a cooling process and a heating process.

In the second cycle C2, the second refrigerant radiates heat to the secondary medium and condenses in the second condenser 23 of the second cascade heat exchanger 42. After the second refrigerant is expanded in the second expansion valve 21, the second refrigerant absorbs heat from the indoor air and evaporates in the second evaporator 22 and thus cools the indoor air. Then, the second refrigerant flows into the second condenser 23. The second refrigerant circulates as described above to repeat a condensation process, an expansion process, and an evaporation process and thus cool the inside of the room.

In the third cycle C3, the third heat medium discharged from the third compressor 31 flows into the third condenser 32 of the third cascade heat exchanger 43 and radiates heat to the secondary medium and condenses. After the third heat medium is expanded in the third expansion valve 33, the third heat medium absorbs heat from the showcase and evaporates in the third evaporator 34 to freeze or refrigerate the inside of the showcase. Then, the third heat medium is suctioned into the third compressor 31. In the third cycle C3, the third heat medium circulates as described above to repeat a compression process, a condensation process, an expansion process, and an evaporation process and thus freeze or refrigerate the showcase.

### (5-4) Feature

The heat treatment system 5 according to the present embodiment further includes the cascade unit 40 including the first to third cascade heat exchangers 41 to 43. Therefore, heat may be efficiently transferred via the cascade unit 40 from the first cycle C1 serving as a heat-source side cycle to the second and third cycles C2 and C3 serving as load side cycles.

At least a part of the cascade unit 40 is disposed outdoors. Therefore, it is possible to reduce the restriction on the refrigerant used for the cascade unit 40 disposed outdoors.

### (5-5) Modification A of Fifth Embodiment

According to the above-described embodiment, the entire cascade unit 40 is disposed outdoors, but this is not a limitation. According to the present modification, the first cascade heat exchanger 41 is disposed outdoors, and the second cascade heat exchanger 42 and the third cascade heat exchanger 43 are disposed indoors. A part of a pipe coupling the first cascade heat exchanger 41 and the second cascade heat exchanger 42 and a part of a pipe coupling the first cascade heat exchanger 41 and the third cascade heat exchanger 43 are disposed outdoors, and the remaining part is disposed indoors. A pipe coupling the second cascade heat exchanger 42 and the third cascade heat exchanger 43 is disposed indoors. As described above, when a part of the cascade unit 40 is disposed indoors, a cutoff valve is provided between an outdoor area and an indoor area in the secondary cycle where the secondary medium flows in the cascade unit 40.

### (5-6) Modification B of Fifth Embodiment

According to the fifth embodiment described above, the cascade unit 40 includes the secondary cycle where the first to third cascade heat exchangers are connected in series, but this is not a limitation.

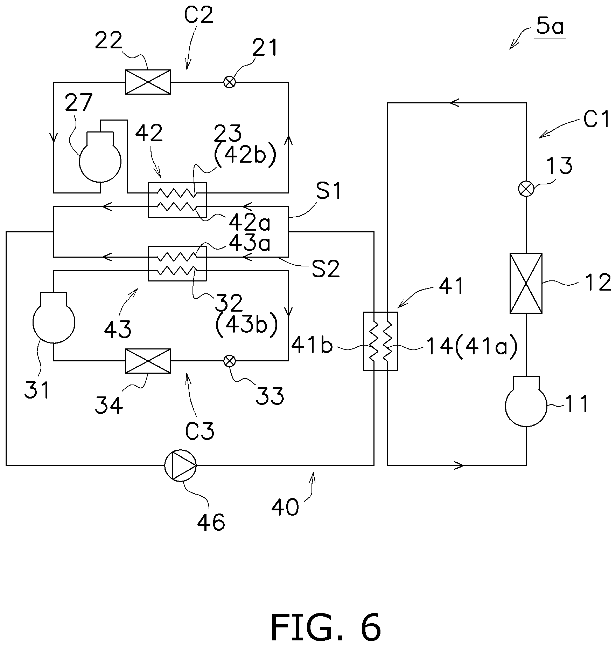

In a heat treatment system 5a according to the present modification, as illustrated in Fig. 6, the cascade unit 40 includes the secondary cycle where the second cascade heat exchanger 42 and the third cascade heat exchanger 43 are arranged in parallel. The secondary cycle includes a first secondary cycle S1 and a second secondary cycle S2.

Specifically, as the first secondary cycle S1, a circuit is configured in which the first cascade heat exchanger 41, the second cascade heat exchanger 42, and the circulating pump 46 are coupled with a pipe. As the second secondary cycle S2, a circuit is configured in which the first cascade heat exchanger 41, the third cascade heat exchanger 43, and the circulating pump 46 are coupled with a pipe.

After the secondary medium radiates heat to the first refrigerant to be cooled in the heat radiation unit 41b of the first cascade heat exchanger 41, the secondary medium branches and flows into the heat absorption unit 42a of the second cascade heat exchanger 42 and the heat absorption unit 43a of the third cascade heat exchanger 43. The secondary medium heated by absorption of heat from the second refrigerant in the heat absorption unit 42a and the secondary medium heated by absorption of heat from the third heat medium in the heat absorption unit 43a join together and flow into the heat radiation unit 41b of the first cascade heat exchanger 41.

### (6) Modification of First to Fifth Embodiments

The first to third cycles C1 to C3 described according to the above first to fifth embodiments are various cycles for which the total number of the heat-source side cycles and the load side cycles is three. There is no limitation as long as the first refrigerant or heat medium, the second refrigerant or heat medium, and the third refrigerant or heat medium are different from one another, but preferred specific examples are described in Table 1 below. Table 1 describes an application and a refrigerant or heat medium used for the application. In Table 1, a heat medium partially using a latent heat refers to a heat medium using sensible heat and latent heat.

**[Table 1]**

| Heat-source side C1 | Heat-source side C2 | Use-side C2 | Use-side C3 | Application |
|---|---|---|---|---|
| R32 | - | Water | R1234ze | Air conditioning & high-temperature hot-water supply |
| R32 | - | Heat medium partially using latent heat | R1234yf | Air conditioning (latent heat medium) & high-temperature hot-water supply |
| R32 | - | CO₂ | R1234ze | Waterless air conditioning & high-temperature hot-water supply |
| R32 | - | Water | Brine | Air conditioning & freezer or refrigerator |
| R32 | - | Water | R404A | Air conditioning & freezer or refrigerator |
| R32 | - | Water | R407H | Air conditioning & freezer or refrigerator |
| R32 | - | Water | R468A | Air conditioning & freezer or refrigerator |
| R32 | - | Water | CO₂ | Freezer or refrigerator |
| R32 | - | R410A | CO₂ | Air conditioning & freezer or refrigerator |
| R32 | - | R466A | CO₂ | Air conditioning & freezer or refrigerator |
| R32 | - | R513A | CO₂ | Air conditioning & freezer or refrigerator |
| R32 | - | R515B | CO₂ | Air conditioning & freezer or refrigerator |
| R32 | - | Water | CO₂ | Air conditioning & freezer or refrigerator |
| R32 | Water | CO₂ | - | Use solar heat or exhaust heat as heat source |
| R32 | Heat medium partially using latent heat | CO₂ | - | Use solar heat or exhaust heat as heat source |
| R454B | - | R1234ze | CO₂ | Medium GWP as heat source Air conditioning & hot-water supply |
| R1234yf | - | Water | CO₂ | Low GWP as heat source Air conditioning & freezer or refrigerator |
| R1234ze | - | Water | CO₂ | Low GWP as heat source Air conditioning & freezer or refrigerator |
| R1234ze | CO₂ | Water | - | Heat-source side C1 corresponds to low outside air |
| R1234yf | CO₂ | Water | - | Heat-source side C1 corresponds to low outside air |
| CO₂ | R32 | Water | - | Heat source corresponds to high outside air, supercooling circuit |
| CO₂ | R1234ze | Water | - | Heat source corresponds to high outside air, supercooling circuit |
| CO₂ | R1234yf | Water | - | Heat source corresponds to high outside air, supercooling circuit |
| Ammonia | - | Water | CO₂ | Air conditioning & freezer or refrigerator |
| R290 | - | Water | CO₂ | Air conditioning & freezer or refrigerator |

### (7) Sixth Embodiment

### (7-1) Overall Configuration

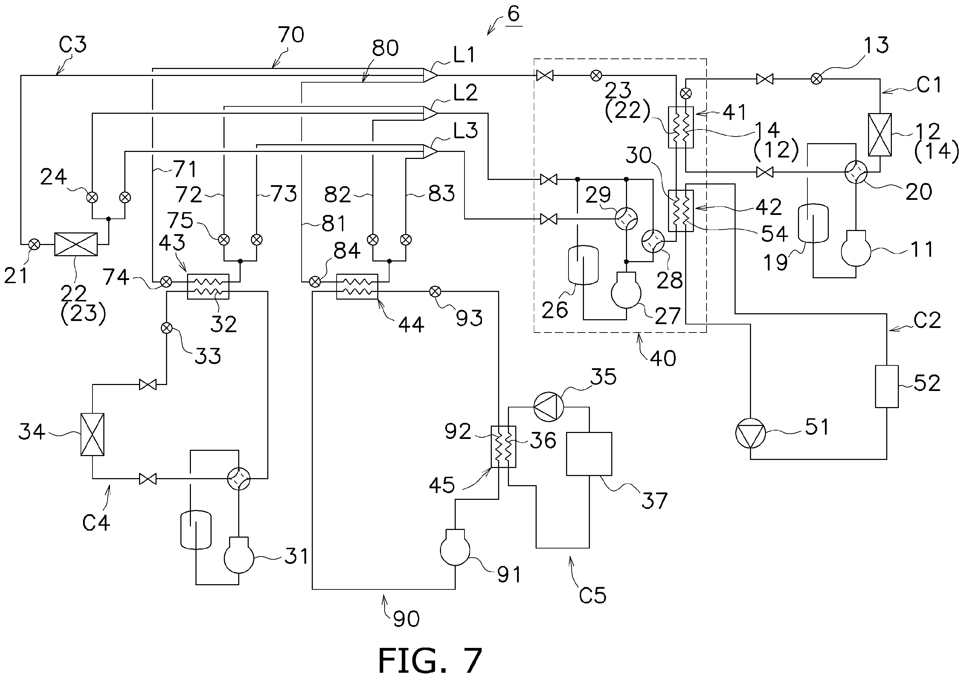

As illustrated in Fig. 7, in a heat treatment system 6 according to a seventh embodiment, the total number of heat-source side cycles and load side cycles is four or more. Here, the heat treatment system 6 includes two heat-source side cycles and three load side cycles. The first cycle C1 and the second cycle are heat-source side cycles, and the third cycle C3, a fourth cycle C4, and a fifth cycle C5 are load side cycles.

### (7-2) Detailed Configuration

The first cycle C1 is a heat-source side cycle forming an outdoor unit of an air conditioner. The first cycle C1 includes the first compressor 11, the first condenser 12 (or the first evaporator 14), the first expansion valve 13, the first evaporator 14 (or the first condenser 12), a first accumulator 19, and a four-way switching valve 20. The first cycle C1 circulates, for example, R32.

The second cycle C2 is a heat-source side cycle using solar heat. The second cycle C2 includes the circulating pump 51, the solar heat panel 52, and a heat absorption unit 54. The second cycle C2 circulates, for example, CO₂.

The third cycle C3 is an air cooling or air heating cycle forming an indoor unit of the air conditioner. The third cycle C3 includes a second expansion valve 21, the second evaporator 22 (or the second condenser 23), the condenser 23 (or the evaporator 22), an air cooling expansion valve 24, a second accumulator 26, the second compressor 27, and four-way switching valves 28 and 29. The third cycle C3 circulates, for example, R1234yf, R404A, R407H, or R468A.

The fourth cycle C4 is a freezer cycle and a refrigerator cycle. The fourth cycle C4 includes the third compressor 31, the third condenser 32, the third expansion valve 33, and the third evaporator 34. The fourth cycle C4 circulates, for example, CO₂.

The fifth cycle C5 is a hot-water supply cycle. The fifth cycle C5 includes the circulating pump 35, the heat absorption unit 36, and the hot water storage tank 37. The fifth cycle C5 circulates, for example, water.

The heat treatment system 6 in the present embodiment includes a plurality of secondary cycles 70, 80, and 90 that directly or indirectly exchanges heat with a plurality of cycles among the first to fifth cycles C1 to C5.

The first secondary cycle 70 exchanges heat with the first cycle C1, the second cycle C2, and the fourth cycle C4. The first secondary cycle 70 and the first cycle C1 share the first cascade heat exchanger 41. The first secondary cycle 70 and the second cycle C2 share the second cascade heat exchanger 42. The first secondary cycle 70 and the fourth cycle C4 share the third cascade heat exchanger 43.

The first secondary cycle 70 primarily includes the first cascade heat exchanger 41, the second cascade heat exchanger 42, the third cascade heat exchanger 43, a first pipe 71, a second pipe 72, a third pipe 73, an expansion valve 74, the second accumulator 26, the second compressor 27, and the four-way switching valves 28 and 29. The first pipe 71 couples a coupling portion L1 and the third cascade heat exchanger 43. The second pipe 72 couples the third cascade heat exchanger 43 and a coupling portion L2. The third pipe 73 couples the third cascade heat exchanger 43 and a coupling portion L3.

In the first secondary cycle 70, the third refrigerant flowing through the third cycle C3 branches and flows at the coupling portion L1 and joins again at the coupling portion L3. Therefore, the secondary medium circulating through the first secondary cycle 70 is the same as the refrigerant circulating through the third cycle C3.

The second secondary cycle 80 exchanges heat with the first cycle C1, the second cycle C2, and the third secondary cycle 90 which will be described below. The second secondary cycle 80 and the first cycle C1 share the first cascade heat exchanger 41. The second secondary cycle 80 and the second cycle C2 share the second cascade heat exchanger 42. The second secondary cycle 80 and the third secondary cycle share a fourth cascade heat exchanger 44. The second secondary cycle 80 indirectly exchanges heat with the fifth cycle C5.

The second secondary cycle 80 primarily includes the first cascade heat exchanger 41, the second cascade heat exchanger 42, the fourth cascade heat exchanger 44, a first pipe 81, a second pipe 82, a third pipe 83, an expansion valve 84, the second accumulator 26, the second compressor 27, and the four-way switching valves 28 and 29. The first pipe 81 couples the coupling portion L1 and the fourth cascade heat exchanger 44. The second pipe 82 couples the fourth cascade heat exchanger 44 and the coupling portion L2. The third pipe 83 couples the fourth cascade heat exchanger 44 and the coupling portion L3.

In the second secondary cycle 80, the third refrigerant flowing through the third cycle C3 branches and flows at the coupling portion L3 and joins again at the coupling portion L1. Therefore, the secondary medium circulating through the second secondary cycle 80 is the same as the refrigerant circulating through the third cycle C3.

The third secondary cycle 90 exchanges heat with the fifth cycle C5 and the second secondary cycle 80. The third secondary cycle 90 and the second secondary cycle 80 share the fourth cascade heat exchanger 44. The third secondary cycle 90 and the fifth cycle C5 share a fifth cascade heat exchanger 45.

The third secondary cycle 90 primarily includes a compressor 91, the fifth cascade heat exchanger 45, an expansion valve 93, and the fourth cascade heat exchanger 44.

The secondary medium circulating through the third secondary cycle 90 is different from the refrigerants circulating through the first to fifth cycles C1 to C5 and in the first and second secondary cycles 70 and 80. The secondary medium circulating through the third secondary cycle 90 is, for example, R1234ze.

The cascade unit 40 in the present embodiment includes the first cascade heat exchanger 41, the second cascade heat exchanger 42, the accumulator 26, the second compressor 27, and the four-way switching valves 28 and 29. The cascade unit 40 is disposed outdoors.

### (7-3) Operation of Heat Treatment System

### (7-3-1) Air Cooling Operation

First, an operation of the heat treatment system 6 when an air cooling operation is performed in the third cycle C3 will be described. During the air cooling operation, the four-way switching valve 20 of the outdoor unit is set to a communication state on the solid line side. During the air cooling operation, the operations of the first to fourth cycles C1 to C4 are performed, while the operations of the fifth cycle C5 and the second and third secondary cycles 80 and 90 are not performed.

In the first cycle C1, the first refrigerant discharged from the first compressor 11 flows into the first condenser 12 and radiates heat to the outside air and condenses in the first condenser 12. After the first refrigerant is expanded in the first expansion valve 13, the first refrigerant absorbs heat from a first secondary medium (the third refrigerant) and evaporates in the first evaporator 14 of the first cascade heat exchanger 41. Then, the first refrigerant passes through the four-way switching valve 20 and the accumulator 19 and is suctioned into the first compressor 11. In the first cycle C1, the first refrigerant circulates as described above to repeat a compression process, a condensation process, an expansion process, and an evaporation process.

In the second condenser 23 of the first cascade heat exchanger 41, the first secondary medium (the third refrigerant) radiates heat to the first refrigerant and condenses. The third refrigerant flows into the third cycle C3 and the first secondary cycle 70 at the coupling portion L1.

In the second cycle C2, the second heat medium heated by the solar heat panel 52 is supplied by the circulating pump 51 to the heat absorption unit 54 of the second cascade heat exchanger 42, and heat is absorbed from the first secondary medium (the third refrigerant). The second heat medium continuously circulates through the second cycle C2.

In the third cycle C3, the third refrigerant flows from the coupling portion L1 toward the second expansion valve 21, expands in the second expansion valve 21, and then absorbs heat from the indoor air and evaporates in the second evaporator 22 to cool the indoor air. Then, the third refrigerant is expanded in the air cooling expansion valve 24, passes through the coupling portion L2, and is suctioned into the second compressor 27 via the accumulator 26. The third refrigerant discharged from the second compressor 27 flows into the second cascade heat exchanger 42 by the four-way switching valve 28. In a condenser 30 of the second cascade heat exchanger 42, the third refrigerant radiates heat to the second heat medium of the second cycle C2 and condenses. Then, the third refrigerant flows into the second condenser 23 of the first cascade heat exchanger 41. The third refrigerant circulates as described above to repeat a condensation process, an expansion process, and an evaporation process and thus cool the inside of the room.

In the first secondary cycle 70, the third refrigerant (the first secondary medium) passes from the coupling portion L1 through the first pipe 71, expands in the expansion valve 74, and then flows into the third cascade heat exchanger 43. In the third cascade heat exchanger 43, the first secondary medium absorbs heat from a fourth heat medium and evaporates. Then, the first secondary medium is expanded in the expansion valve 75, passes through the second pipe 72, and joins with the third refrigerant circulating through the third cycle C3 at the coupling portion L2.

In the fourth cycle C4, the third heat medium discharged from the third compressor 31 flows into the third condenser 32 of the third cascade heat exchanger 43 and radiates heat to the first secondary medium and condenses. After the fourth heat medium is expanded in the third expansion valve 33, the fourth heat medium absorbs heat from the showcase and evaporates in the third evaporator 34 and thus freeze or refrigerate the inside of the showcase. Then, the fourth heat medium is suctioned into the third compressor 31. In the third cycle C3, the third heat medium circulates as described above to repeat a compression process, a condensation process, an expansion process, and an evaporation process and thus freeze or refrigerate the showcase.

### (7-3-2) Air Heating Operation

Next, an operation of the heat treatment system 6 when the air heating operation is performed in the second cycle C2 will be described. During the air heating operation, the four-way switching valve 20 of the outdoor unit is set to a communication state on the broken line side. During the air heating operation, the operations of the first, third, and fifth cycles C1, C3, and C5 are performed, while the operations of the second and fourth cycles C2 and C4 and the first secondary cycle 70 are not performed. In the second cycle C2, the circulating pump 51 is stopped to interrupt the operation.

In the first cycle C1, the first refrigerant discharged from the first compressor 11 flows into the first condenser 12 via the four-way switching valve 20. In the first condenser 12 of the first cascade heat exchanger 41, the first refrigerant radiates heat from the third refrigerant and condenses. Then, the first refrigerant expands in the first expansion valve 13 and then flows into the first evaporator 14. In the first evaporator, the first refrigerant absorbs heat from the outside air and evaporates in the first evaporator 14. In the first cycle C1, the first refrigerant circulates as described above to repeat a compression process, a condensation process, an expansion process, and an evaporation process.

In the second evaporator 22 of the first cascade heat exchanger 41, the first secondary medium (the third refrigerant) absorbs heat to the first refrigerant and evaporates. Then, the first secondary medium sequentially passes through the four-way switching valve 28 and the accumulator 26 and is compressed by the second compressor 27. The compressed first secondary medium passes through the four-way switching valve 29 and flows into the third cycle C3 and the second secondary cycle 80 at the coupling portion L3.

In the third cycle C3, the third refrigerant flows from the coupling portion L3 into the second condenser 23, radiates heat from the indoor air and condenses in the second condenser 23, and heats the indoor air. Then, after the third refrigerant is expanded in the second expansion valve 21, the third refrigerant flows into the second evaporator 22 via the coupling portion L1. The second refrigerant circulates as described above to repeat a condensation process, an evaporation process, and an expansion process and thus heat the inside of the room.

In the second secondary cycle 80, the second secondary medium (the third refrigerant) flows into the fourth cascade heat exchanger 44 from the coupling portion L3 via the third pipe 83. In the fourth cascade heat exchanger 44, the second secondary medium radiates heat from the third secondary medium circulating through the third secondary cycle 90 and condenses. Then, after the third secondary medium is expanded in the expansion valve 84, the third secondary medium passes through the first pipe 81 and flows into the second evaporator 22 via the coupling portion L1.

In the third secondary cycle 90, the third secondary medium discharged from the compressor 91 radiates heat and condenses in the heat radiation unit 92 of the fifth cascade heat exchanger 45. After the third secondary medium is expanded in the expansion valve 93, the third secondary medium absorbs heat from the third secondary medium (the third refrigerant) and evaporates in the heat radiation unit of the fourth cascade heat exchanger 44. The third secondary medium is suctioned into the compressor 91.

In the fifth cycle C5, the water in the hot water storage tank 37 is supplied by the circulating pump 35 to the heat absorption unit 36 of the fifth cascade heat exchanger 45 and is heated by absorption of heat from the third secondary medium. The hot water generated by heating returns to the hot water storage tank 37, and the hot water continuously circulates through the fifth cycle C5 until a predetermined heat storage temperature is obtained.

### (7-4) Feature

In the heat treatment system 6 according to the present embodiment, the total number of the heat-source side cycles and the load side cycles is four or more. As described above, the use of four or more media in four or more cycles makes it possible to use an appropriate medium depending on the application of the load side cycle.

The present disclosure is not limited as long as three or more different media are used in three or more cycles. Therefore, for example, three or more different media may be used in four or more cycles.

For example, the features of the above-described embodiments and modifications may be combined as appropriate.

Although the embodiments of the present disclosure have been described above, it is understood that various changes may be made to forms and details without departing from the spirit and scope of the present disclosure described in claims.

### REFERENCE SIGNS LIST

1 to 6 Heat treatment system
11, 27, 31, 91 Compressor
12, 16, 23, 30, 32 Condenser
13, 17, 21, 24, 33, 74, 75, 84, 93 Expansion valve
14, 15, 18, 22, 34 Evaporator
19, 26 First accumulator
20, 28, 29 Four-way switching valve
35, 46, 51 Circulating pump
36, 38, 41a, 42a, 43a, 54 Heat absorption unit
37 Hot water storage tank
40 Cascade unit
41 to 45 Cascade heat exchanger
41b, 42b, 43b, 53, 92 Heat radiation unit
52 Solar heat panel
70, 80, 90, S1, S2 Secondary cycle
71, 72, 73, 81, 82, 83 Pipe
C1 First cycle
C2 Second cycle
C3 Third cycle
C4 Fourth cycle
C5 Fifth cycle

**CITATION LISTPATENT LITERATURE** [Patent Document 1] Japanese Patent Laying Open No. 11-173725

## Claims

1. A heat treatment system (1, 2, 3, 4, 5, 5a, 6) comprising:
at least one heat-source side cycle; and
at least one load side cycle, wherein
the heat-source side cycle and the load side cycle share a cascade heat exchanger (41, 42),
a total number of the heat-source side cycle and the load side cycle is three or more,
a first cycle (C1) circulates a first refrigerant or heat medium,
a second cycle (C2) circulates a second refrigerant or heat medium,
a third cycle (C3) circulates a third refrigerant or heat medium, and
the first refrigerant or heat medium, the second refrigerant or heat medium, and the third refrigerant or heat medium are different from one another.

2. The heat treatment system according to claim 1, wherein
at least one of the first to third cycles includes a cycle that circulates a refrigerant, and
the cycle that circulates the refrigerant is a vapor-compression refrigerant cycle (C1).

3. The heat treatment system according to claim 1 or 2, wherein
at least one of the first to third cycles includes a cycle that circulates a heat medium, and
the cycle that circulates the heat medium is a cycle using sensible heat in a liquid phase.

4. The heat treatment system according to claim 1 or 2, wherein
at least one of the first to third cycles includes a cycle that circulates a heat medium, and
the cycle that circulates the heat medium is a cycle using sensible heat and latent heat.

5. The heat treatment system according to any one of claims 1 to 4, wherein
the load side cycle includes at least one of a freezer cycle and a refrigerator cycle, and
the freezer cycle and the refrigerator cycle use a high-pressure refrigerant.

6. The heat treatment system according to any one of claims 1 to 5, wherein
the load side cycle includes at least one of a heating cycle and a hot-water supply cycle, and
the heating cycle and the hot-water supply cycle use a medium-pressure refrigerant or a low-pressure refrigerant.

7. The heat treatment system according to any one of claims 1 to 6, wherein
the heat-source side cycle is disposed outdoors, and
the heat-source side cycle disposed outdoors uses a refrigerant having an RCL smaller than R410A.

8. The heat treatment system according to any one of claims 1 to 7, further comprising a cascade unit (40) including the cascade heat exchanger, wherein
at least a part of the cascade unit is disposed outdoors.

9. The heat treatment system according to any one of claims 1 to 8, wherein
the first and second cycles are the heat-source side cycles, and
the first refrigerant or heat medium and the second refrigerant or heat medium are different from each other.

10. The heat treatment system according to any one of claims 1 to 9, wherein
the load side cycle includes at least one of a cooling cycle, a freezer cycle, and a refrigerator cycle, and
the heat-source side cycle uses a medium-pressure refrigerant or a low-pressure refrigerant.
